(19)

Europäisches
Patentamt
European
Patent Office
Office européen
des brevets

(11) **EP 1 995 613 A1**

(12) **EUROPEAN PATENT APPLICATION**

(43) Date of publication:
**26.11.2008 Bulletin 2008/48**

(51) Int Cl.:
*G02B 6/00* (2006.01)     *F21V 8/00* (2006.01)
*G02F 1/13357* (2006.01)

(21) Application number: **08156652.3**

(22) Date of filing: **21.05.2008**

(84) Designated Contracting States:
**AT BE BG CH CY CZ DE DK EE ES FI FR GB GR
HR HU IE IS IT LI LT LU LV MC MT NL NO PL PT
RO SE SI SK TR**
Designated Extension States:
**AL BA MK RS**

(30) Priority: **21.05.2007 US 931134 P**

(71) Applicant: **Rohm and Haas Denmark Finance A/S
2100 Copenhagen (DK)**

(72) Inventors:
• **Aylward, Peter T.
Hilton, NY 14468 (US)**

• **Bourdelais, Robert P.
Pittsford, NY 14534 (US)**
• **Hong, Qi
Rochester, NY 14613 (US)**

(74) Representative: **Buckley, Guy Julian
Rohm and Haas Europe Services ApS - UK
Branch
European Patent Department
4th Floor
22 Tudor Street
London
EC4Y 0AY (GB)**

(54) **Mini Lightbar Illuminators For LCD Displays**

(57)     A backlight for a display comprises a reflector box containing reflective areas and aperture areas and mini lightbars located in a region below the reflector box and arranged to provide light through the apertures.

EP 1 995 613 A1

**Description**

**FIELD OF THE INVENTION**

This invention relates to the art of backlight apparatus for a display and to a liquid crystal display employing such apparatus. In particular, the present invention relates to a Liquid Crystal Display (LCD) backlight with solid-state light sources.

**BACKGROUND OF THE INVENTION**

While liquid crystal displays ($LCD_S$) offer a compact, lightweight alternative to cathode ray tube (CRT) monitors, there are many applications for which the image quality of LCD displays are not yet satisfactory, particularly as the relative size of these devices increases. Larger LCD panels, such as those used in laptop computer or larger displays, are transmissive, and thus require a backlight. This type of light-providing surface, positioned behind the LCD panel, directs light outwards and towards the LCD.

Conventional approaches for backlighting use various arrangements of cold cathode fluorescent (CCFL) light sources with light guide plates, one or more types of enhancement films, polarization films, reflective surfaces, and other light conditioning elements. Conventional flat panel backlight solutions using side-mounted CCFLs are less and less desirable as display size increases and, particularly as display area grows, can be susceptible to warping in manufacture or due to heat. Light-guiding backlight techniques that are conventionally employed for smaller devices are increasingly hampered by low brightness or luminance levels and by problems related to poor uniformity as the display size increases, such as would be needed for digital TV, for example. Existing backlight apparatus for LCD displays and other display and illumination applications, often using banks of CCFLs lined up in parallel, can be relatively inefficient. These display solutions can also be relatively thick, due to the need to house the CCFL and its supporting films and surfaces behind the LC panel. The CCFL light source itself presents an environmental problem for disposal, since these devices contain some amount of mercury. To compensate for uniformity and brightness problems with conventional CCFL-based backlights, a number of supporting films are conventionally interposed between the backlight and the display, or disposed following the display, such as relatively high-cost reflective polarization films for example. As is well known, the spectral characteristics of CCFLs are relatively poor when compared to other types of light sources.

Faced with the inherent difficulties and limitations to CCFL used in backlighting applications, researchers have been motivated to pursue alternative backlighting approaches. A number of solutions have been proposed utilizing Light-Emitting Diodes (LEDs). Recent advances in LED brightness, color output, and overall performance, with continuing reduction in cost, make LEDs, lasers, and solid-state light sources in general particularly attractive. However, because LEDs and lasers act as point light sources, appropriate solutions are needed for redirecting and spreading this light to provide the uniform plane of light that is needed for backlighting and to provide the necessary color uniformity.

One approach for providing backlight illumination using LEDs is using an array arrangement, such as that described in the paper by M. Zeiler, J. Huttner, L. Plotz, and H. Ott entitled "Late-News Paper: Optimization Parameters for LED Backlighting Solutions" SID 2006 Digest pp. 1524-1527. Using this type of solution, an array of LED clusters using Red (R), Green (G), and Blue (B) LEDs is deployed as a backlight for an LCD displays. Two types of clusters are described: RGGB and RGB. Similarly, U.S. Patent No. 6,789,921 entitled "Method and Apparatus for Backlighting a Dual Mode Liquid Crystal Display" to Deloy et al describes an array arrangement used for an instrument panel. However, except for specialized uses such as for some types of instrument panels and for very high-end monitors and TV panels, array arrangements do not appear promising, due to problems of poor color and brightness uniformity, high parts count, high heat, and dimensional requirements.

Light guides have been employed for spreading light from a point source in order to form a line of light. For example, U.S. Patent No. 5,499,112 entitled "Light Guide, Illuminating Device Having the Light Guide, and Image Reading Device and Information Processing Apparatus Having the Illuminating Device" to Kawai et al. discloses redirecting light from one or more LEDs to a line in a scanning apparatus, using a single light guide having extraction features distributed along its length. U.S. Patent No. 5,400,224 entitled "Lighting Panel" to DuNah et al. describes a molded panel assembly having multiple light guides that are treated with randomized roughness over a back surface for backlighting illumination.

A number of solutions have been proposed for redistributing LED light over a larger area, along a light guiding panel. One proposed solution is the MicroLens™ molded light guide from Global Lighting Technologies Inc., Brecksville, OH that spreads light from a single LED over a larger light panel. Similarly, U.S. Patent Application Publication No. 2003/0123246 entitled "Light Emitting Panel Assemblies" by Parker shows a small-scale light panel using multiple point sources with optical "deformities" that redirect light into the panel.

Another type of solution first directs the light from the LED, lamp, or other point source along a line, and then spread this light over a panel. For example, U.S. Patent No. 5,835,661 entitled "Light Expanding System for Producing a Linear or Planar Light Beam from a Point-Like Light Source" to Tai et al. describes a beam-expanding light pipe that directs a line of light to a light panel for distribution over an area. Similarly, the luminaire arrangement described in U.S. Patent Application No. 2005/0231973 entitled "Efficient Luminaire with Directional Side-Light Extraction" by Cassarly et al. uses a light pipe with a light extraction structure for redirecting light along a backplane, such as for an exhibit or display case. As yet another example of this approach, U.S. Patent No. 5,857,761 entitled "Illumination Device" to Abe et al. describes a light guide that spreads point source light into a light radiation plate.

Another means for spreading light using an optical path conversion has been suggest in U.S. Patent No. 6,464,588. For example a bar -like illuminator is used to provide light from the side of a transparent slab that has rows of prisms to redirect light. Such a leans is further shown with a turning film to bring light on-axis.

Still other backlighting solutions employ flexible optical fibers for directing light from a single light source, and then treated for spreading the light for emission behind an LCD panel. Different versions of this approach are described, for example, in U.S. Patent No. 6,714,185 entitled "Back Lighting Apparatus of Liquid Crystal Display Using Optical Fiber" to Kim et al. and in U.S. Patent No. 5,542,016 entitled "Optical Fiber Light Emitting Apparatus" to Kaschke.

As the above-cited examples attest, there has been considerable work directed to the goal of providing LED backlighting. However, although there have been a number of solutions proposed, there are significant drawbacks inherent to each type of solution, particularly when faced with the problem of backlighting for a display panel of standard laptop dimensions or larger. The 2-D matrix proposed in the '921 Deloy et al. disclosure would be difficult to implement inexpensively, of relatively high cost, bulky, and prone to uniformity problems. The light guide arrangement described in the '112 Kawai et al. disclosure is optimized for scanning applications that require a uniform line of light, rather than display backlighting applications. The molded panel arrangement described in the '224 DuNah et al. disclosure may work well enough for general illumination, but would be prone to uniformity problems for full-color display applications. This type of solution is increasingly expensive to manufacture in larger sizes and is subject to warping due to heat and mechanical stress. More importantly, such a solution does not provide good color mixing and would not be well suited to applications using solid-state light sources. Point source-to-panel configurations such as those described in the '3246 Parker application are impractical and exhibit uniformity problems for color and brightness for larger-sized displays. Light-guide-to-back-panel arrangements such as those described in the '661 Tai et al. disclosure are inefficient, are subject to poor uniformity, and are suitable only for relatively small displays. The use of treated optical fibers has advantages for small-scale handheld displays but would be impractical and inefficient for desktop or larger display designs.

In addition to these drawbacks, conventional solutions generally fail to address important challenges for high-quality color imaging, required for widespread commercialization and acceptance of LC displays. Color gamut is one important consideration that is of particular interest to display designers. Conventional CCFLs provide a measure of color quality that is acceptable for many applications, offering up to about 70% of the NTSC color gamut. Although this may be acceptable for laptop and computer monitor applications, it falls short of what is needed for full-color TV displays.

In contrast to CCFL light sources, LEDs and other solid-state light sources, because of their relatively high degree of spectral purity, are inherently capable of providing 100% or more of the NTSC color gamut. In order to provide this enlarged color gamut, three or more different-colored LEDs or other solid-state sources are needed. To support such an expanded color gamut when using LEDs and other solid-state light sources, a high level of color mixing is required from the backlighting apparatus. As is well known to those skilled in the imaging display art, achieving a good level of color uniformity when using solid-state light sources, such as Red (R), Green (G), and Blue (B) LEDs, is particularly challenging. Conventional backlighting solutions that employ larger-area light guides, such as those described above, would provide correspondingly inferior color mixing.

Other challenges related to backlighting for larger scale displays include the need for low-cost assembly, light efficiency, uniformity, and compact size. As noted earlier, conventional LED backlighting solutions fall short of what is needed to meet these additional requirements. Additionally, it would be particularly useful to eliminate the need for a reflective polarizer, which may be possible where uniformity and brightness are sufficiently improved.

Providing uniformity of backlights for lighting and display application has been the source of numerous studies. Solid-state lighting is highly desirable because it provides a relatively compact source of high intensity of light. It also has the potential to provide a large color gamut of light, which is more difficult for CCFL's. The actual color point for LED may be individually selected and tuned because the light is a blend of at least two or more colors. The output of the LED's can be easily adjusted to provide the desired color gamut. LED's have a fast switch time which can reduce LCD motion blur by blinking backlight and may triple the light output by the potential of color sequential LCD. LED's also have higher optical efficiency by better matching the LCD color filters than CCFL light sources. While there are numerous advantages to LED's and other solid-state light sources, there are also a number of problems that need to resolve in order to provide the best lighting conditions for display and other applications. LED's have a very intensity point source of light that creates some problems in projecting it over a wider area and presenting it in a uniform manner along the length or width of a LGP or lightpipe. A number of means from light extraction or light redirecting features have been suggested in the art. Several of these have varying degrees of success in providing uniform brightness. As displays become larger and larger, providing a means to supply sufficient brightness as well as uniform brightness becomes an increasing challenge. Even at maximum power single LED sets have some difficulties in providing the desired light intensity in a uniform manner over the large surface area of a display. Higher power can result in increased temperature and early life failure of the LED. Another possible solution would be to provide more than one LED set per lightbar. This could be feeding light from both ends of a lightbar or more than one LED sets per input side.

For LGP feeding individual LED colors becomes a problem for both good color mixing and uniform lighting. Many designs have been suggested from tapered LGP with printed dots in a desired pattern to the addition of light extraction features on the view side surface or micro prism on the non-view side. While these approaches have had some limited success, they are still challenged to provide a high level of brightness. LED's have been provided in side-lit and backlit configurations. With side-lit displays, the LED's and their heat sinks and power supply can be hidden with the edge frame. When used in a backlit configuration, it is difficult to mask or diffuse the high intensity of the light source and special spacing configuration have been proposed in order to provide color mixing. Some of these require a much thicker form factor that is not desirable or appealing to the consumer. It is also difficult to obtain the maximum amount of light based on the output of the LED's because they require multiple reflections off scattering surfaces. There remains a need for a more efficient means of providing light for a display or lighting application and there remains a need to provide backlights with higher and more uniform brightness particularly for large display applications.

Thus, it can be seen that there is a need for an LED backlight solution that can provide improved backlight properties.

## SUMMARY OF THE INVENTION

The invention contains a backlight for a display that comprises a reflector box containing reflective areas and aperture areas and mini lightbars located in a region below the reflector box and arranged to provide light through the apertures. can be inexpensively manufactured, has minimal thickness, and provides. Embodiments of the invention can provide improved backlight properties.

## BRIEF DESCRIPTION OF THE DRAWINGS

Figure 1 is a backlight with mini lightbars
Figure 2 bottom half of a backlight
Figure 3 is a backlight with sloped mini lightbars
Figure 4 is a backlight with sloped mini lightbars and means separate light
Figure 5 is a backlight with lens -like output surface
Figure 6 is an "L-shaped" mini lightbar
Figure 7 is a backlight with vertical mini lightbars
Figure 8 is a backlight with means of off axis light spreading
Figure 9 is a backlight with slot openings
Figure 10 is an elongated illuminator lit by mini lightbars

## DETAILED DESCRIPTION OF THE INVENTION

The present invention provides a backlight apparatus that is well suited to display applications, particularly for LC display panels, such as those used for LCD TV, medical diagnostics displays, imaging displays, and military displays, for example. In addition, the backlight apparatus of the present invention can be used for other illumination applications where solid-state lighting is advantageous.

In the context of the present disclosure, the term "solid-state light source" has its conventional meaning accepted by those in the illumination arts, indicating a type of emissive light source formed from semiconductor materials. Solid-state light sources include, for example, Light-Emitting Diodes (LEDs), Organic Light Emitting Diodes (OLEDs) and (Polymer Light Emitting Diodes) PLEDs, as well as semiconductor lasers. Generally the term solid-state light source as used herein means any source of light from a small point-like source but the design of the emission source may be such that the light being emitted is either collimated or spread so as to appear to be non-point-like. An array of several solid-state light sources may be arranged in a manner or with lens elements so as to combine the light in a broader non-point-like source.

It is an object of the present invention to advance the art of backlight illumination and to provide the high level of color mixing needed to take advantage of solid-state light sources. The present invention provides a backlight apparatus for directing light toward a display panel with light levels of brightness and improved uniformity.

The mini lightbars of this invention have the advantages of:

1.excellent color mixing within small mixing area,

2. thin light box by utilizing the entire thickness of light box for spacial luminance uniformity,

4 light weight for using light bars instead of using waveguide plate,

3. high luminace by scalable design with sufficient number of LED sets,

4. high light recycling efficiency by without light bars inside light box,

5. small losses by using short bar,

6. high extraction uniformity by using short light extraction area

The invention also provides variations in the backlight apparatus and a display employing the backlight apparatus. A process for providing light is also disclosed. It is a feature of the present invention that it provides a backlight that utilizes multiple mini lightbars.

It is an advantage of the present invention that it may employ solid-state light sources to provide area backlighting for a display. The apparatus of the present invention is scalable and is particularly adaptable to larger sized LC panels.

It is a further advantage of the present invention that it eliminates the need for a light guide plate or other planar type panel, which can help to reduce cost and dimensional profile for backlight components and simplify manufacturing..

It is a further advantage that many LED sources may be used to illuminate the display plane without having to pipe and redirect light over long distances that can result in overall low illumination levels.

These and other objects, features, and advantages of the present invention will become apparent to those skilled in the art upon a reading of this detailed description when taken in conjunction with the drawings wherein there is shown and described an illustrative embodiment of the invention.

In the context of the present disclosure, light direction is described as upwards. A backlighting apparatus or backlight thus emits light upwards from an illumination plane. The terms "below" and "above" then comply with this direction assignment. A display panel is a transmissive spatial light-modulating device, such as an LC display device or other array of light valves. The term linear or mini lightbars as used herein with respect to illuminator and light channels means only slightly longer in length than in width. The mini lightbars may be straight or may have a compound shape for directing light towards the view side of a display. Examples may include a variety of cross-sectional end-shapes such as square, rectilinear, round, triangular or they may be a composite shape of two or more shapes. At least one surface of the mini lightbars may comprise a means to extract or otherwise breakup or redirect the total internal reflection of the light channel. Such a means may be done in a manner provide uniform light appearance. The terms as used herein mini lightbars and truncated lightbars, truncated illuminator, light channel, and truncated light channel are the same. The term mini lightbars refer to the light source and its associated light conveyance means.

The term view side refers to the side in which the light is primarily directed towards and is the side in which a viewer would view light or an image. It should be noted that in a display there may be films, glass and or layers between the backlight and the viewer. The non-view side refers to the side opposite of the view side.

The mini lightbars useful in this invention are position below the illumination plane and they redirect light upward, in the direction of a display panel. The display panel and illumination plane are substantially parallel. The end primary direction of light from light channel array is upward and towards the display panel. As can be well appreciated by those skilled in the imaging arts, mini lightbars could be disposed orthogonally so that they extend in the general direction of the x axis and are spaced apart by some distance along the y axis or visa versa. In some embodiments that mini lightbars may be positioned at an angle to the illumination plane or perpendicular to it. In subsequent description and figures, some of these arrangements will be shown. In some embodiments useful in this invention, the mini lightbars have a center-to-center spacing between mini lightbars of between than 5 to 50 mm.

A type of, mini lightbar has a length dimension L to width dimension W or thickness dimension T ratio of 5 to 1 to 1 and 1 to 1 to 1. Preferably, length L is less than 5 times the width dimension W. Preferably, width dimension W and thickness dimension T differ from each other by no more than a factor of 2. In one embodiment dimensions T and W are approximately equal. Maintaining dimensions W and T at much less than length L improves color mixing and uniformity, since light that is directed into elongated light channel 18 is propagated through this light-guiding structure by means of Total Internal Reflection (TIR). Because it uses TIR, mini lightbars are highly efficient, with very low light loss except in the intended direction as provided by light extraction element. In a preferred embodiment of this invention the mini lightbars comprise a light source and it associated power supply, cooling fins, an air gap, at least one light input end, a light mixing section, an a light transport section with means of directing or extracting light from the transport section. In other embodiments the transport section may be arranged in a manner as to spread light beyond its surface output side area. And it further embodiments backlight may further comprise optical films, bonding means, and or layers, air gaps and other means known in the art for use in display applications. The light mixing section need only be a very millimeters in length. It does not have to be any longer than the distance to allow the various wavelengths of the LED to be mix to a uniform color temperature. If a white LED is used and the white point is the desired color, then a mixing section would be optional. The light transport section May have the same or different cross sectional profile than the light mixing section. The mini lightbars may be positioned in a manner in which the light source and the mixing section are hidden from the view plane so as not to adsorb or scatter light in a manner to cause non-uniform lighting. Rigidity of mini lightbars typically is not a problem because they are relatively short. In the context of the present disclosure, the descriptive term "rigidity" applies to an element that exhibits no visible bowing or bending due to its own weight. This arrangement also simplifies assembly of mini lightbars. In cross-section, mini lightbars may be square, rectangular, or circular, or have some other shape. For example, mini lightbars can have curved sidewalls for improved mixing of light from LED light sources. The cross-sectional shape or dimensions may change over their length. It is desirable to provide waveguides that provide on-axis brightness of greater than 2000 cd/m2.

As noted earlier, achieving a high level of color uniformity when using RGB LEDs can be a significant challenge. A single LED might alternately be used, such as a white light LED. Alternately, additional color LEDs can be used to increase brightness or enhance color gamut, such as to provide an RGGB arrangement or to add cyan, orange, or other colors. Other lighting arrangements are also possible, as is described in more detail subsequently.

There are a variety of films, layer or function members with different functionality that may be used with the mini lightbars of this invention. These include but are not limited to a diffuser that could be a bulk type diffuser that employs pigments, air voids, or internal glass beads. Alternately, the diffuser could be a surface type diffuser, for example, a beaded surface with mono or multi-sized beads with a transparent binder. A Fresnel lens type diffuser could also be used. The mini lightbars used in a display that are useful in this invention may further comprises at least one function selected from the group consisting of light diffusing, light collimation, brightness enhancement, light polarization, light modulating, light filtering, a light source. Such functions are useful in providing higher brightness, good on-axis as well as off-axis viewing. Light collimation, diffusion and scattering helps to manipulate light to provide the most pleasing viewing to the viewer.

Light management films discussed above may include but are not limited to various types of light enhancement films or Brightness Enhancement Films (BEF), such as Vikuiti™ Thin Brightness Enhancement Film, a product of 3M, St. Paul, MN. Polarizers can also be provided, such as reflective polarizers. The film and or layers and their functions may be combined into a single film with more than one functionality.

Mini lightbars may be distributed in any of a number of configurations or positions so as to provide uniform illumination. The separation distance between adjacent elongated illuminators can be varied based on factors such as the needed brightness, area, and uniformity. Adjacent elongated illuminators can be adjacent, but not optically coupled. An integral bridge may join one or more elongated illuminators in part of the profile as shown in some of the figures in this invention. Such integral bridges are useful for providing improved stiffness and may also help to provide improved brightness uniformity between elongated illuminators.

Fill factor can be an important consideration for achieving needed brightness levels, as well as for mixing spectral components where light sources of different wavelengths are used. Fill factor for each mini lightbar would be computed as the ratio of the surface area of the one or more light sources that direct light into light channel to the incident light surface area of light channel. Fill factor for backlight apparatus would be computed as the ratio of the sum of the emissive areas of the mini lightbar to the surface area of illumination plane of the apparatus.

## Light Sources

Each mini lightbar has at least one independent solid-state light source. Solid-state light source can be independent in that it delivers light to its associated lightbar.

The solid-state light sources of this invention could be LEDs, as noted earlier. LEDs are advantaged due to their high brightness and good spectral characteristics. Providing direct light emission within narrow wavelength bands, LEDs are thus capable of providing illumination that offers an improved color gamut over conventional light sources. CCFL sources, for example, offer about 70% of the NTSC color gamut when used with an LCD panel. LED sources can achieve 100% or greater of the NTSC range. LEDs also are advantaged because they can be rapidly pulsed.

Mini lightbars with a mixing section of the present invention provide a high degree of color mixing for LEDs. Unlike light guiding plates and other conventional solutions, the mini lightbars and their mixing sections that form a light channel with relatively narrow width dimensions provide excellent color mixing. This arrangement yields a substantial number of reflections as light propagates through the mixing section and down the path provided by the light channel immediately following the mixing section. Red (R), Green (G), and Blue (B) LEDs can be positioned as an RGB triad of LEDs at one or both ends of light channel. An RGGB arrangement, with more than one LED of one or more colors could alternately be used to boost the green light level. Alternately, R, G, and B LEDs could be distributed at different ends of light channel, so that, for example, a single light channel has a Red and a Green LED on one end and a Green and a Blue LED on the other end. Optionally, a fourth LED, such as a white light LED, or other color LED, could be positioned at one or both ends of light channel. In another embodiment, each separate light channel could have a single color light source, so that, for example, three adjacent light channels have Red, Green, and Blue LEDs respectively.

Light sources can be continuously on, so that mixed RGB or white light is provided to display plane. Alternately, color sequential backlighting arrangements are possible. In one embodiment, R, G, and B are rapidly cycled from backlight apparatus by activating the corresponding light sources 16 in sequence. Alternately, a linear scan can be provided, with R, G, and B or other colors provided in a scrolling sequence across the surface of backlight apparatus. A display plane can then activate corresponding rows or columns of pixels with the same sequence, providing sequential modulated color. Such an arrangement would obviate the need for a color filter array, for example, with an LC display. Mixed colors such as cyan, magenta, and yellow could alternately be provided using timed activation of the light sources.

Laser light sources could alternately be used with elongated illuminator of the present invention. Their relative spectral purity and fast response times make lasers an attractive alternative for some types of display applications. The high brightness and high optical power levels of lasers may allow a single source to illuminate multiple mini lightbars.

Alternative light sources that are can be used with elongated illuminator may include Organic Light Emitting Diodes (OLEDs) and (Polymer Light Emitting Diodes) PLEDs.

Light Channels

Mini lightbars light channels are formed from highly transparent materials, including various types of glass, such as a laminated safety glass. Plastics that can be used include PMMA, polycarbonate, polyester, polyamide, polysulfone, polyolefin, cyclic-olefin and copolymers thereof. Light channels may have additives for improved thermal and light stability. Optical transmission of the material should exceed about 90%. Except where intentionally treated, surfaces of light channel should have an optical finish. A high index of refraction n is preferred for its favorable light-guiding properties.

In fabrication, the base stock used to form the mixing section and light channel of the mini lightbars may be cast, profile extruded or molded. Further conditioning of the material, such as by heating and polishing, could be beneficial for achieving improved optical performance. It is also useful to provide mini lightbars with a high degree of smoothness. Having a TIR surface with less than 50 nm Ra of roughness helps to minimize light leakage due to scattering when light hits a rough surface. Rough surfaces will breakup the TIR of the light and change its angle such that it may exit the mini lightbars in an undesired point. This can reduce the overall effectiveness of the mini lightbars.

While a high degree of stiffness or rigidity is advantageous for elongated illuminator light channels because of their long lengths and narrow profile, mini lightbars are sufficient short that they will not bend. A clip, holder, or other support can be used to attach the mini lightbars to the bottom side or non-view side of the floor of the reflector box reflector box or to the floor of the region below the reflector box reflector box.

Light Redirection Features

There are a number of embodiments for light extraction element and or light redirecting features as shown in the figures in this disclosure. The basic function of light redirecting features is to direct light that is otherwise being channeled by TIR and thereby cause light to be turned and then emitted from view side of the view side of the light channel of the mini lightbar. This can be done in a number of ways, including the following:

(i) Treatment of light channel to form an emissive surface. Types of surface treatment include forming light redirecting structures along an edge of light channel, along the surface that faces the display. For example, one approach is to form an array of prism structures along the length direction L. Microstructures used could be an array of prisms, pyramids, hemispheres, or other well-defined geometries to frustrate TIR. These are primarily bottom structures formed as individual elements, or aligned in columns. Microstructures could be molded or otherwise formed of varying shapes and sizes, as a function of the distance from the light source. Additionally light extraction features may be used in the embodiments of this invention. Light extracting features typically are located on the view side of the elongated illuminators. One example of this approach is given in U.S. Patent No. 5,506,929 to Tai et al., cited earlier. The surface of light channel could also be roughened or polished to provide light extraction element. Embossing or pressure can be used to form light extraction features.

(ii) Application of a light-extracting film component. One possible film for this purpose is described in commonly assigned U.S. Patent Application No. 20050270798 entitled "Brightness Enhancement Film Using A Linear Arrangement Of Light Concentrators" by Lee et al., incorporated herein by reference. Strips of a light extracting film can be applied to the surface of elongated light channel 18, using adhesive, for example. Adhesives used can be pressure or heat sensitive and could be curable using ultraviolet or electron-beam radiation. Chemical crosslinking materials such as epoxies could alternately be used. Adhesives capable of withstanding a broad temperature range (-40 to 85C) are often required for LCD display applications. Adhesive that can withstand higher temperature range (60-85 degrees C) and higher relative humidity (95% @ 65C) would be preferred. A high degree of optical transmission would be preferred. Additives could be used to modify the refractive index of adhesives. A fine-tip dispenser or hot melt glue dispenser could be used to attach segments of a film component to a sidewall (Light-emitting side directed towards the display panel or view. of light channel 18. In fabrication, light channels 18 could be placed side by side, then have a film attached to one surface, then be trimmed and separated, or packaged and used with the affixed film. Any adhesively attached material should be carefully selected so that it does not provide bending force under high heat conditions.

Optionally, the light emissive surface of mini lightbars may be featured to form light extraction structures thereon. A portion of light channel can be molded such as using a roller or otherwise treated to form light-redirecting microstructures. If elongated illuminator is injected molded, surface light extraction structures (their negative form) may be formed as part of the mold. Then, as the polymer is injected and cooled, the light extraction structures become an integral part of elongated illuminator.

(ii) Printed dots. A pattern of reflective dots, printed along a base portion of light channel opposite its light emission surface, can be used to redirect light outward from light channel. Printed dots can be of varying density and size, helping to provide a more uniform light output. Examples of light extraction techniques using this type of approach include that described in U.S. Patent No. 5,857,761 to Abe et al., cited earlier.

(iii) Shaping of light channel in mini lightbars: 1. Light channels could be formed with a tapered profile.. (iv) Volume-scattering. As another option, micron-scale particles can be dispersed inside light channel 18 to create scattering due to a refractive index mismatch.

(v) Internal mirrors. As described in U.S. Patent No. 6,104,371 entitled "Modular, High-Intensity Fiber Optic Backlight for Color Displays" to Wang et al., TIR can be interrupted by reflective structures that are formed within a light guide.

Combinations of these types of treatments listed in (i) through (v) above could also be used. Light extraction features could be individual elements. In order to provide uniform light emission along the length of light channel, the size and density of the coupled area may vary as a function of the distance along light channel from solid-state light source. For example, where there are LED light sources at each end of light channel, light extraction features could be distributed with higher density near the center than toward the ends. Alternately, the distribution density of light redirecting elements could be substantially continuous in one direction.

Light redirecting may be provided on more than one surface. The opposite side of light channel, furthest from the LCD and output surface, generally provides a smooth surface to prevent light leakage but may alternately be structured, treated, or roughened to enhance the amount of light extraction.

Light redirecting features may be molded into, embossed, pressed, adhered, printed or laminated to the of light channel portion of the mini lightbar. It is desirable not to have light redirecting or light extraction features on the mixing section that faces display panel 24 or other light output side.

### Monitoring Color Shifts

One well-known problem with LEDs and other types of solid-state light sources relates to spectral stability and accuracy, which can cause some amount of color shifting. An optional color sensor can be provided as a component of one or more mini lightbars. Color sensor can be used in a control loop that compensates for color shifts such as can be due to ageing, heat, or manufacturing differences between LEDs or other types of light source. Optionally, image data for pixels nearest a particular light pipe can be adjusted to compensate for detected color shifts.

### System Considerations

Using any of a number of devices currently available, mini lightbars of the present invention are capable of providing a high level of illumination, at between 2000-6000 nits or higher. At high energy levels, heat buildup can be a problem with LEDs in some applications. Backlight apparatus can provide one or more heat sinks, cooling fans, or other mechanisms to help ventilate or otherwise dissipate excess heat during operation. Advantageously, heat-dissipating components can be positioned along peripheral edges of a display device, away from the LCD panel when using the apparatus and methods of the present invention.

### Examples

One embodiment uses an acrylic light pipe as light channel 18, nominally ¼ in. square in cross section. The light pipe is highly transparent and has an optical finish on all sides and ends. To form light channel 18, a larger acrylic square bar (0.25" x 0.25" x 6 feet) was sawed into 14 inch segments and the ends were polished on a lathed. A piece of light extraction film was attached to one surface of light channel 18 with UV epoxy, dispensed using a syringe to form a uniform narrow epoxy bead down the length of light channel 18. The adhesive was then cured under a UV lamp.

An LED array is used as light source 16. Multi-die RGB LEDs are mounted in close proximity to light channel 18. These multi-die LEDS consist of 1 red, 1 blue and 2 green die in a single package (OSRAM OSTAR Projection devices, type LE ATB A2A, from OSRAM, Inc.) These devices can be individually turned on, with the brightness of each die controlled by a separate current source.

Another embodiment of an elongated illuminator 14 is shown in lengthwise cross-section in Figure 20, not to scale. For attachment of a light extraction film 76 as light extraction element 20, a UV adhesive (Norland UV epoxy) 70 was applied to one side of light channel 18 using a micro-tip dispenser. Care was taken to apply only enough monomer so that, when the light extraction film structure was applied, it provided uniform wetting of the surface to adhere the light extraction film assembly to light channel 18. The light extraction film assemblage was laminated to light channel 18 and then exposed to a UV source to cross-link the adhesive. The light extraction film structure was made with a micro-structured inverted prism film having individual prism elements, in a distribution with fewer micro-structured inverted prisms toward the end than in the center. The inverted prisms were partially buried into a polyurethane adhesive 74 that was approximately 8 microns thick. The adhesive had been previously been coated onto a 5 mils polyester sheet 72 and heat laminated at 230 degrees F in order to adhere the prism sheet to one side of adhesive coated polyester sheet 72. The prisms were embedded to approximately 10 microns due to the displacement of the heat during lamination.

A collimating linear Fresnel film with a focal length of approximately 2.5 inches) was placed over top of light channel 18 with an air gap approximately equal to the focal length of the film. A series of photos demonstrated high brightness with good spatial uniformity. LEDs were lit individually to produce R, G, B illumination and then mixed together to form a well-mixed white LED light.

Incorporated herein by reference are U.S. Patent No. 6,425,675; and U.S. Patent Application Nos. 2004/0223691 and US2004/0179776.

A useful embodiment of this invention provides a backlight for a display, method of providing a display comprising a reflector box comprising reflective areas and aperture areas and mini lightbars located in a region below the reflector box and arranged to provide light through the apertures. Such a backlight and display and method of providing a display is useful in providing a high level of illumination as well as a high level of illumination. In such embodiments the backlight and display has at least a 15% lighting uniformity across the display. Light uniformity refers to the luminance and or brightness level difference from point to point. The viewer viewing plane is the most critical but it is desirable to provide uniform light entering the light modulation layer. It other embodiments it is desirable to provide at least this light uniformity after at least one diffusion function. Such a diffusion function may be provides as the light enters the reflector box or after it leaves the reflector box. In other embodiments the light uniformity of less than 15% is desirable prior to the light entering a polarization function.

In an embodiment of this invention the backlight and its apertures area are in the floor or base of the reflector box and the apertures are connected with reflective areas. The apertures may be arranged in a manner to help provide good light uniformity over the aperture as well as to areas over the reflective areas connecting the apertures. They may be holes of a variety of shapes (round, square, rectangular, honeycomb, slots or other shapes) or combination of shapes. The reflector box surfaces of these embodiments are reflective. They may be diffusive, lambertian or specular mirror-like. The reflective surface help to provide improved light uniformity in substantially all region of the reflector box.

The backlight for a display useful in this invention as well as the display and the method of providing said further comprises at least one function selected from the group consisting of diffusion, light collimation, light spreading, light modulation, light filtering. Light control for backlights and display used in this invention helps to assure that the viewer sees a pleasing image that is free of bands or streaks of excessively dark or light areas. Diffusion helps to spread light and hide objects while light collimation and light spreading films are useful for illumination enhancement for both on-axis and off-axis light distribution. Polarization recycling may also be used in conjunction with the embodiments of this invention to increase the amount of light being setup for the light modulation layer. Light filtering refers to the color filter arrays that are used in LCD display applications.

In a preferred embodiment of this invention there is a region below the reflector box that helps to hide the solid-state lighting source as well as part of the mini lightbars. The region below the reflector box may also comprise at least one selected from the group consisting of light source, power supply, wiring, fan, ventilation means, reflector, light input, light mixing, light channel, light redirection, light extraction. By providing a means of hiding the light source and it associated power supply, wiring, fans, heat sink and other equipment below the reflector box and only allowing the light that exits mini lightbar to enter the empty reflector box, the uniformity of the light being send or otherwise directed towards the viewer is substantially more uniform than other lightbox arrangements used in the art in which the shape of the light source must be masked in order to provide acceptable illumination. The mini light bars are useful in this invention comprise a light source, a light input surface, a mixing section, a light channel, a means or redirecting light and or means of extracting light such that it can be projected out the light output surface of the light channel and into the apertures of the reflector box. As used herein the mini lightbar further comprise a light source and preferable a solid-state light source. The light input surface of the mini lightbars may be have an antireflection coating, may have a variety of shapes or design such that the mini Lightbar accepts greater than 75% of the light from its associated light source. While less than 75% light acceptance could be used, it is wasteful of energy and in general not that desirable.

In the backlight, display and the process for providing said embodiments of this invention; the mini lightbars are positioned in a manner wherein the light source and the light mixing section are substantially out of sight when viewed from the reflector box side. This also includes other associated power supplies, wiring cooling means or other control devices used in backlight and display applications.

The region below the reflector box may comprise more than one mini lightbar and their associated light sources. The mini lightbars may be positioned in any configuration as shown in the figures of this disclosure. The mini lightbars may be attached to the under side of the floor of the reflector box or on the floor of the region below the reflector box. They may also be suspended into the floor of the reflector box and the floor of the region below the reflector box. The mini lightbars may also be on an angle to the floor of the reflector box. Such a configuration is useful in maximizing the spacing of the mini lightbars. Within any given backlight or display using these embodiments, some mini lightbars may be on an angle while others are not on an angle.

The mini light bars useful in this invention are truncated and typically have a length to width ratio less than 50 to 1. The end profile may be square, round, rectangular, faceted or other shape that promotes light mixing and light TIR'ing. The shape of the light mix section may be the same or different than the light channel portion of the mini lightbar. The backlight backlight and displays useful in this invention with mini lightbars comprise a solid-state light source, a light input surface, at least one mixing section, a light channel, a means of redirecting light, a light extraction means, a turning film, and an output surface. The light mixing provides light with a uniform color temperature by mixing the light output of the solid-state light source to form white light. The light mixing section may be completed within only few millimeters. The light channel may further comprise redirecting features. Such features help to turn or redirect light from its TIR configuration towards the light output surface of the mini lightbars and to the aperture of the reflector box. The light channel portion of the mini lightbar has at least one sloped surface wherein said slope directs light towards the aperture and output surface of the mini lightbar. The sloped surface may also be reflective. The reflective means may be diffusive, lambertain or specular. If the sloped surface is transparent or semi-transparent, the reflective means may be a separate layer that is either attached with an optical means of coupling such as an adhesive or means of bonding or it may be separated with an air gap. The mini lightbar and its light channel typically has more than one surface. In a non-round configuration such as a square or rectangle there is an end that is opposite of the light input end, a bottom side that faces away from the floor of the reflector box, at least two sides. In one embodiment the light channel of the mini Lightbar has additional means of reflection on more than one surface. In a preferred embodiment of this invention, each of these sides may have a means of reflection. Such means of reflection may include specular, diffuse or lamertain surfaces. The objective is to maximize the amount of light being directed into the aperture areas of the reflection box. In an embodiment of this invention the output of said light channel is greater than 75% of the light entering the light mixing section. Having a high level of light efficient traveling through the mini lightbars helps to assure that the solid-state light sources can operate at a power level that assure long light source life without bum out and does generate excessive heat. In a preferred embodiment the output of said light channel is greater than 90% of the light entering the light mixing section. By designing a highly efficient light bar system helps to cut down on the power requirements, reduces stray light in the system and helps to assure a long operating life of the backlight and the display.

In a useful embodiment of this invention a process for providing light to a display comprising

    a) providing a reflector box with reflective areas and aperture
    b) providing a region below the reflector box
    c) providing a light source below the reflector box
    d) allowing light from the source to pass directly or by reflection through the apertures.

Such a process further comprises at least one function selected from the group consisting of diffusion, light collimation, light spreading, light polarization, light modulation, light filtering. Whether a stand-alone optical film for each functionality or a composite film with more than one functionality, providing light control allows the backlight or display to control the view angle by providing lateral or vertical light control of on-axis and off axis light spreading. The films are also useful in control the brightness uniformity as well as the overall brightness level. Different liquid crystals also require a different setup of polarized light as well as the distribution of on and off axis light entering the light modulation layer.

The overall reflectivity of the reflector box plays an important role in the overall lighting leveling and light distribution. In an embodiment of this invention the process provides a reflector box has a reflectivity of greater than 75%. As mentioned before the reflectivity of the reflector box may be diffusive, specular or lambertain in its properties. It may also be desirable to provide a process wherein said allowing light from the source to pass directly or by reflection through the apertures provides an illumination uniformity of less than 15% differences between the aperture and reflector box reflective areas. As mentioned above the backlight and display may also have at least one diffuser and in a useful embodiment the said allowing light from the source to pass directly or by reflection through the apertures provides an illumination uniformity of less than 15% differences after at least one diffuser function. In a further embodiment the process provides a means wherein said allowing light from the source to pass directly or by reflection through the apertures provides an illumination uniformity of less than 15% differences after at least one diffuser function and at least one light polarization function. In a further embodiment the process provides a means wherein said allowing light from the source to pass directly or by reflection through the apertures provides an illumination uniformity of less than 15% differences after at least one diffuser function and at least one light collimation or light spreading function. In all these embodiments the process is useful in providing uniform lighting for the end viewer. It should be noted that early in the backlight or display stack, more light non uniformity can be tolerated because it is correct or uniformized by films and or other functions higher in the stack

A useful embodiment of this process provides a solid-state light source and it particular an LED light source. LED are preferred because they can provide very intensity light that can be spread over wider areas to provide a high level of illumination for the backlight and display. One of the advantages of this invention is a process that provides a means of hiding many of the backlight and display components in a region below the reflector box. The process of this invention provides a region below said reflector box further comprises mini lightbars, a light source, heat sinks, wiring, fans, ventilation means, control devices and other electronics as well as reflectors and means of holding.

An LC display useful in this invention provides the reflector box of a backlight for a display comprising a reflector box comprising reflective areas and aperture areas and mini lightbars located in a region below the reflector box and arranged to provide light through the apertures. Such displays also may provide at least one function selected from the group consisting of diffusion, light collimation, light spreading, light polarization, light modulation, light filtering. Such functionality is useful in providing a display that has an on-axis illumination of at least 2000 nits. Additionally they may be useful when paired with the desired LC mode to provide wide viewing angle. The display embodiments that provide a high degree of usefulness have a brightness uniformity of less than 15% variation across the screen at the viewing plane.

Embodiments of the invention may provide inexpensive manufacturing, have minimal thickness, and provide color mixing with good uniformity, high brightness, and high levels of efficiency.

Embodiments:

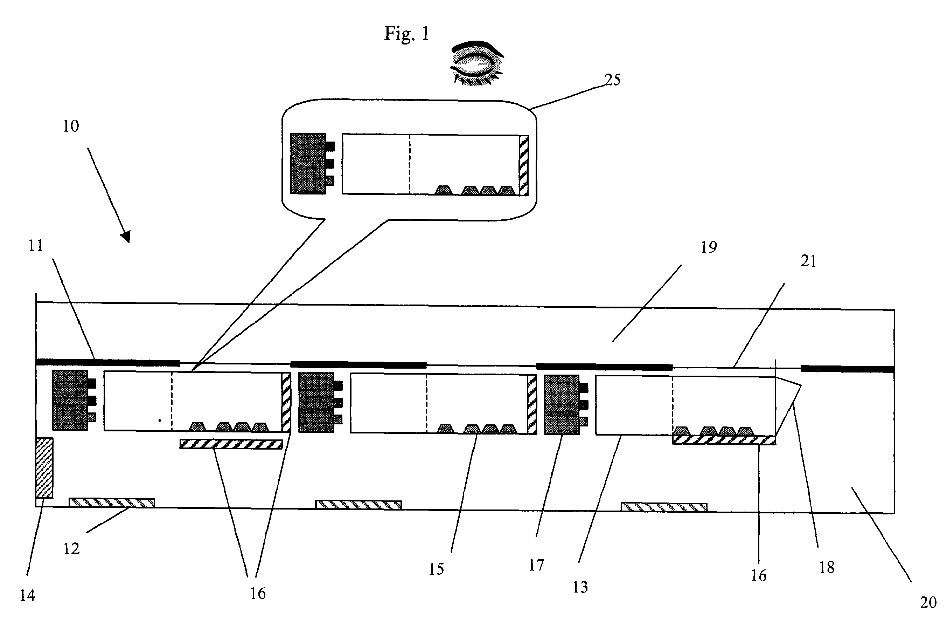

Fig. 1 is an improved backlight 10 for use in a display or light condition in which there are a series of mini-lightbars 25 below the reflector box 19. Reflector box 19 is an empty box with reflective surface. The reflective surface may be white with smooth or roughen surface for diffusive reflection or mirror-like specular reflection. The unique embodiment of this invention is that the light box contains nothing but light while there is a region below the reflector box that contains the light sources. Mini lightbars 25 comprise a solid state light source 17, a light bar with mixing section 13 and regions that contains light and a means of redirecting features 15 and a reflector 16 or 18. Reflector 16 and 18 may have an air gap between the light channel of the lightbar or it may be optically coupled to the mini lightbar. The reflector may be on at least 4 sides of the light channel. The sides include the bottom or non-view side, both sides and the end opposite of the light input side. The only parts in which the reflector is not desired are the light output side as the light exits into the reflector box, the light mixing section or the light input surface unless it aids in redirecting hemispherical generated light from the LED to the proper TIR angle as it enter the light mixing section. The other embodiments of this invention may also use reflectors even through they are not shown in the figure. The reflector may be one continuous reflector or it may be a series of facets. The reflector useful in this invention may also be on the floor of the region containing the mini lightbars.

The base or floor 11 of the reflector box 19 has a series of opening 21 that allow light to be directed into the reflector box. The base or floor provides a means for hiding light source 17 and the mixing section 13 of the mini-light bar. At the end of the mini-lightbar is a means of reflecting light 16 or 18 back into the ligthbar for additional TIR'ing and ultimate light redirecting. Additionally backlight 10 has a region below the light box 20 that contains the mini-lightbar, their heat sinks, power supplies, control electronics, wiring, cooling fans 14 and vents 12 that allow air to circulate and keep the LED's cool.

The mini lightbars 25 and the opening 21 in the floor 11 of the reflector box 19 may be arranged in a variety of configurations in order to provide uniform light to the view side of the backlight. The mini lightbars are provided with a light mixing section that is only a few millimeters long to provide a uniform color temperature of light from the individual light sources. As light leaves the light mix section it has a uniform color temperature. As the light exits the light mixing section, it enters a part of the mini lightbar that may also have redirecting features. While they are shown as a uniform feature, actually it is desirable to have some variation in their size, shape and or density as a function of the distance from the light source. The mini light bars are considerable shorter than other lightbars in the art. Prior art lightbars typically have a length to width ratio of > 100/1. Mini lightbars useful in this invention may have range of length to width ratios between 50 to 1 and 5 to 1. They may range in size from 15 to 125 cm in their length. The end cross sectional shape of the mini lightbars are preferable square but the corners may be rounded or faceted to form other shapes. The light redirecting features may also vary in their size from a few microns to hundreds of microns. The redirecting features useful in this invention differ from micro prisms in their shape, density and material. The light redirecting feature may be devoid of any polymeric materials and preferable the redirecting features have a refractive index difference of greater than 0.05 than the polymeric material of the mini lightbars. The light redirecting features may have a variety of shapes such as but not limited to conical-like, cylinder-like, trapezoidal-like, lens-like, round, square, triangular, pyramidal or a compound feature. The relative depth of the feature may be between 25 and 300 microns. The interior surface of the feature may have a roughness of greater 25 nm. At the end of the mini light bars there may be a reflector 16. The reflector may be spectral or diffusive in it reflection. There may also be an optional sloped reflector at the end of the bar to direct light towards the view side of the display. The backlight assemble of this invention may also include means to support or otherwise attach the mini lightbar to the underside of the floor of the reflector box or mount it to the floor of the region below the reflector box.

The shape of the mini lightbar may also vary. The light input end(s) may be shaped or otherwise contoured to accept more of the light from the near hemispherical light output of the solid-state light source 17. The light input end may have a taper, a curve, prism light surface, indent to provide a recess fro the light source, reflector on certain design to help more of the light to reach the desired TIR angle and allow it to reach the output hole in the floor of the light box. The reflector is not directly in front of the light source but on the top, bottom or sides. The light input side may also be treated with an anti reflection means. Other designs as disclosed in co-pending Docket 93433. The mini lightbar may also have a variety of shapes. The light-mixing portion is preferable square to allow for good light mixing. Other shapes may be also be used. The balance of the mini lightbar may be square, round, tapered, faceted, or compound.

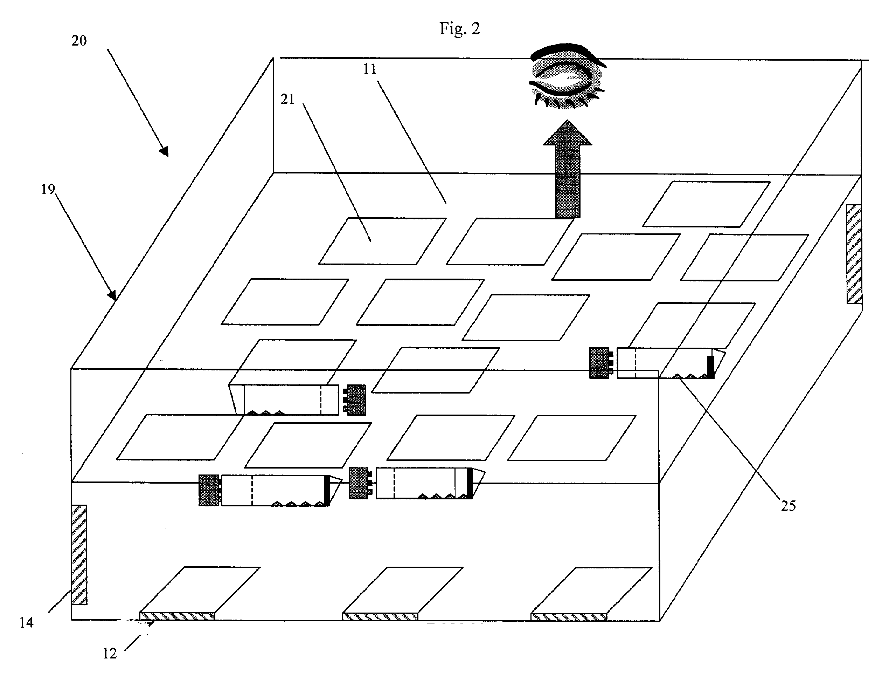

Fig. 2 is the bottom half of a backlight shown in a perspective view with a staggered layout of apertures (holes) 21 in a false bottom pan of a light box. Fig. 2 shows the use of multiples LED or solid-state light sources that provide a high level of brightness. The staggered layout of the holes may be in a variety of configurations, shapes and sizes that provide uniform brightness to the view side. The mini light bars may be arranged in a manner to direct the light either on-axis or somewhat off axis so as to fill in the region between the holes 21 in the floor 11 of the reflector box. The floor of the light box may be reflective. It may be spectral or diffusive in its reflective properties to all or substantially all wavelength of the visible spectrum. While not shown in this figure other embodiments of this invention could also have a hybrid light source with the addition of CCFL or other light source in or feeding into the light box. This is potentially useful in that it can be used as a means to uniformize the light being directed towards the view side of a display. It should be noted that the mini lightbars and their associated light source may be oriented in most any manner (right, left or either side of the opening) so has to provide the best nesting of mini lightbars and also to spread any heat.

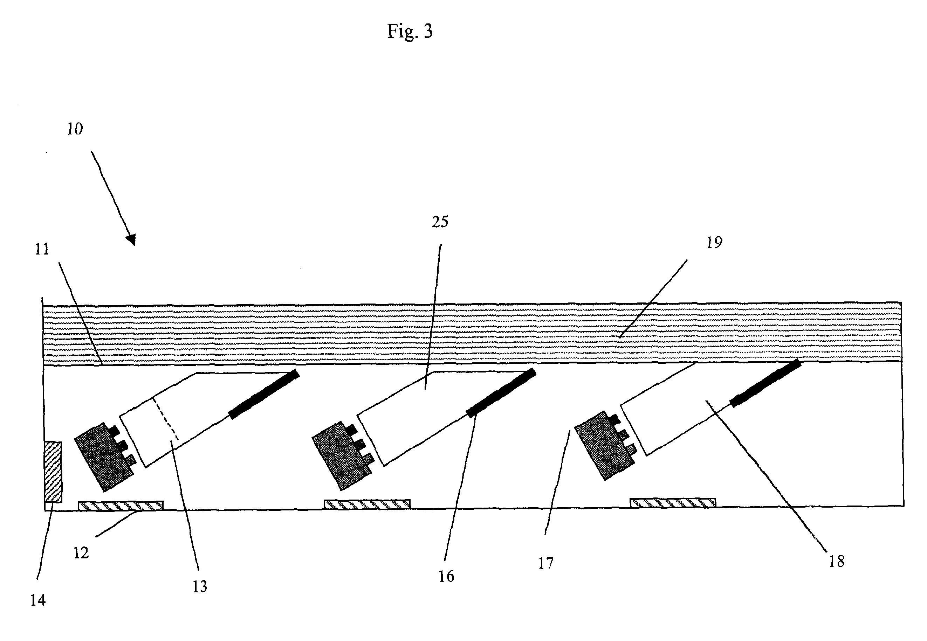

Fig. 3 is a backlight with a sloped mini lightbars 25 with reflector 16 on the under side slope. The reflector helps to breakup the TIR from within the lightbar and allows it to exit through the hole in the floor 11 of reflector box 19. The reflector only partly covers the under side of the mini lightbar. The reflector preferable is mirror-like with a specular reflectance property. In some embodiment a lambertian surface would be useful and would help to prevent hot spots from a highly reflective surface. The surface may also comprise light redirecting features or micro-prism that direct light to the hole in the floor of the light box.

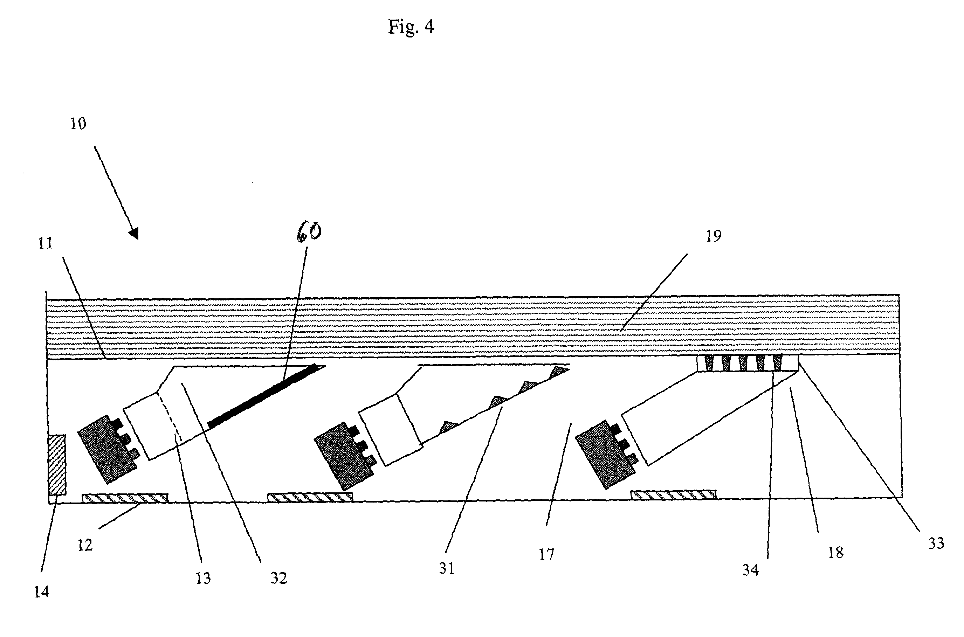

Fig. 4 is an extension of the previous figure with a sloped mini lightbar in which the ends of the lightbar have been modified with a diverging region to spread light over a wider footprint. There may also be an auxiliary aid for light redirecting that includes but not limited to light redirecting features 31 that may comprise holes or indents, a reflective surface 60 or a light extraction features as represented by 33 and air separation 34. The light extraction feature may be any means that is designed to work in conjunction with the slope of the mini lightbar. It may include features that are an integral part of the lightbar or they be on a feature optical film with micro extraction features including prisms, lens, compound shapes in which the optical film is bonded to the light output end of the mini lightbar. The feature may be formed in the optical film surface and the opposite side bonded to the surface of the lightbar or the feature may be optically coupled to the adhesive layer.

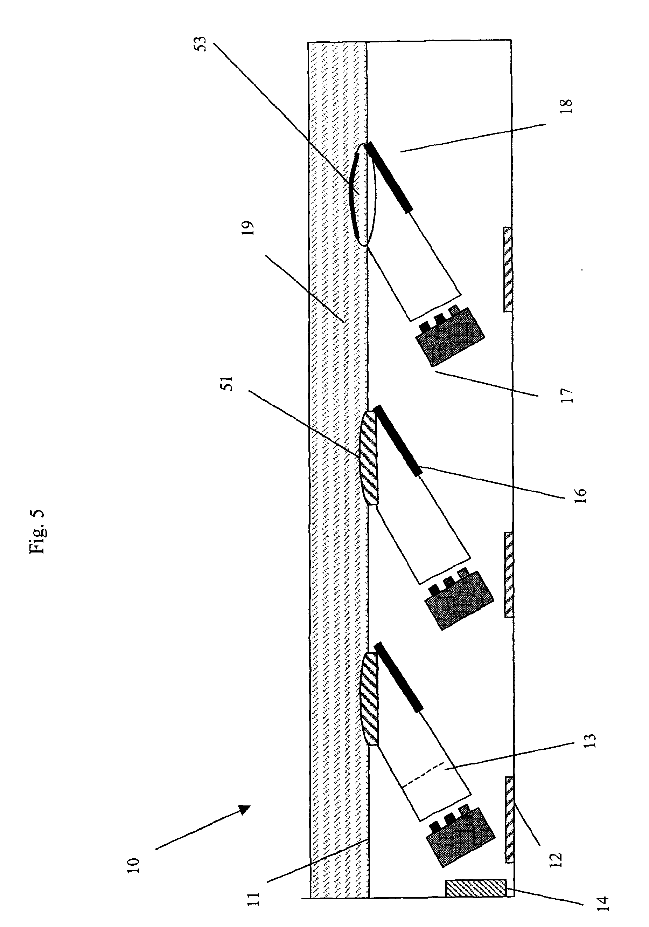

Fig. 5 is a cross sectional view of backlight 10 with sloped mini lightbars with convex lens 51 on the output end of the lightbar and concave lens shaped light output end on the mini lightbar.

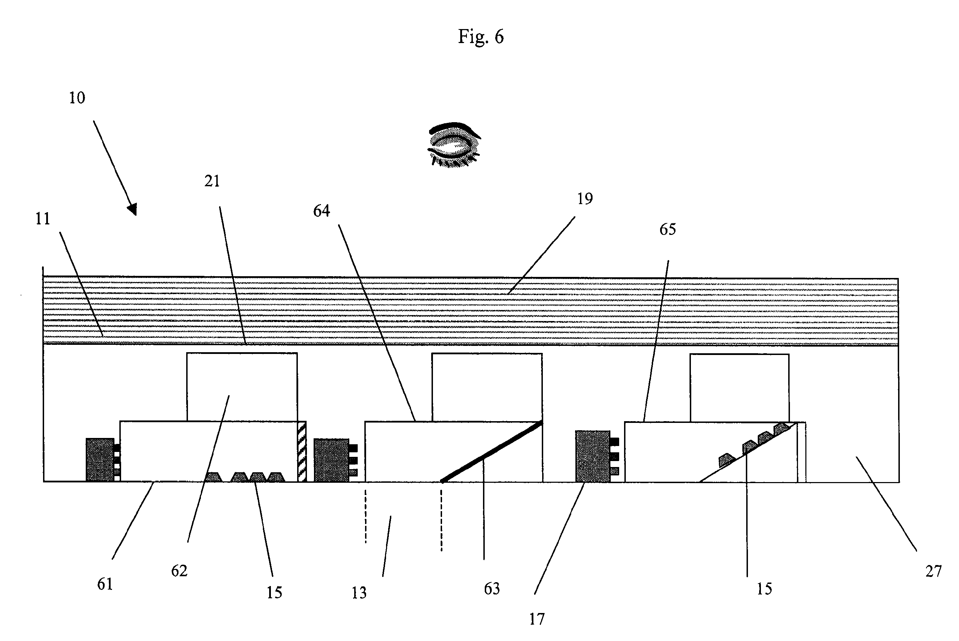

Fig. 6 is a backlight 10 with three variations of modified mini lightbars 61, 64 and 65 that resemble an "L" shape extension 62 that aids in containing and piping light to the reflector box above. Modified mini lightbar 61 has a mixing section at the light input end in order to get good light mixing. It also has light redirecting features 15 and end reflector 16. The "L-shaped" extension 62 helps to TIR light to the upper reflector box 19 through opening 21 in floor 11. The light redirecting features may be arranged in a pattern to maximize the amount of light redirection towards the output side of the mini lightbars. The size, shape, density of the feature may be changed as a function of the distance from the light source. When on a sloped facet, the pattern and the size, shape, density and height may be different than if the light redirecting features were on a flat surface. Mini lightbar 64 is similar but instead of having light redirection features, it has a sloped reflector 63 that turns the light leaving mixing section 13 towards the view side. While only one slope angle is shown it this figure, it is anticipated that more than one angled reflector may be used to better optimize the amount of light that is directed towards the light output end of the mini lightbar.
Mini lightbar 65 is also similar but has a sloped side with light redirecting features.

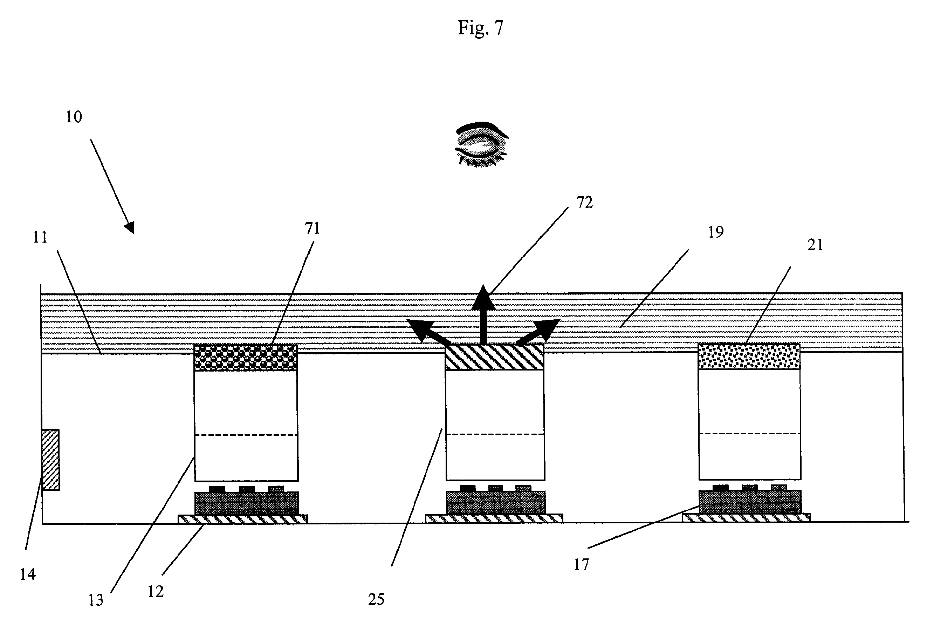

Fig. 7 is a backlight 10 with a means of light control 71 at the light output end of the mini ligthbars 25. The means of light control may include but are not limited to diffusion, light scattering, light shaping for either on-axis or off axis light control as shown by light rays 72. The means of light control may also be a lens shape including convex or concave or combinations thereof. The light control means may be layered and include a means of bonding an optical film or spacer to the output end of the mini lightbar. The optical films that are useful in this invention may include those for polarization, light recycling, light modulating, light filtering, brightness enhancement, diffusion, on-axis light control as well as off axis light control.

The backlight also contains a fan 14, venting means 12, a color mixing section 13 within the mini light bars, a solid state light source 17. The mini lightbars are contained in a region below the floor 11 of reflector box 19.

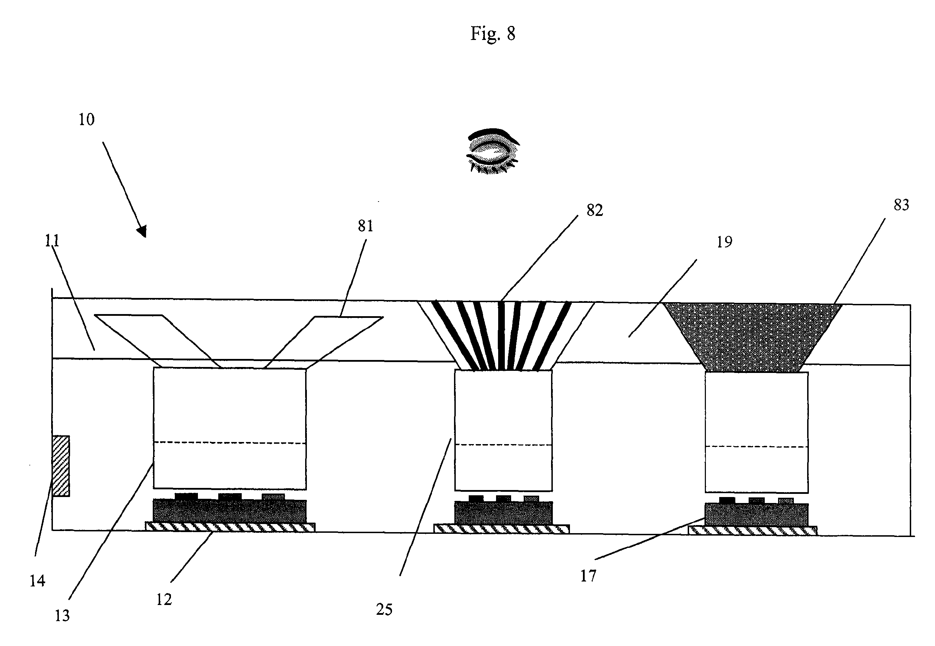

Fig. 8 is a backlight 10 with different means of light distribution to help spread light in an off-axis manner. Light distribution fins 81 is coupled to the output end of the mini lightbar is help to direct light in an off-axis manner. The light distribution may be a variety of shapes and sizes. The fins may be further clad with an outer shin of material that allows the light to be TIR'd t the output end of the fin. Light distribution bundle 82 is a set of optical fibers that are coupled to the output end of the mini lightbar. The optical fiber may be directed to fill in the area between the mini lightbars so as to provide uniform lighting. Light distribution aid 83 is a diverging cone that allows light to spread to the off axis positions between the mini lightbars. The diverging cone may be a polymeric material of substantially the same refractive index of the lightbar. In another embodiment of this invention the diverging cone may be treated with or filled with a phosphoresce material.

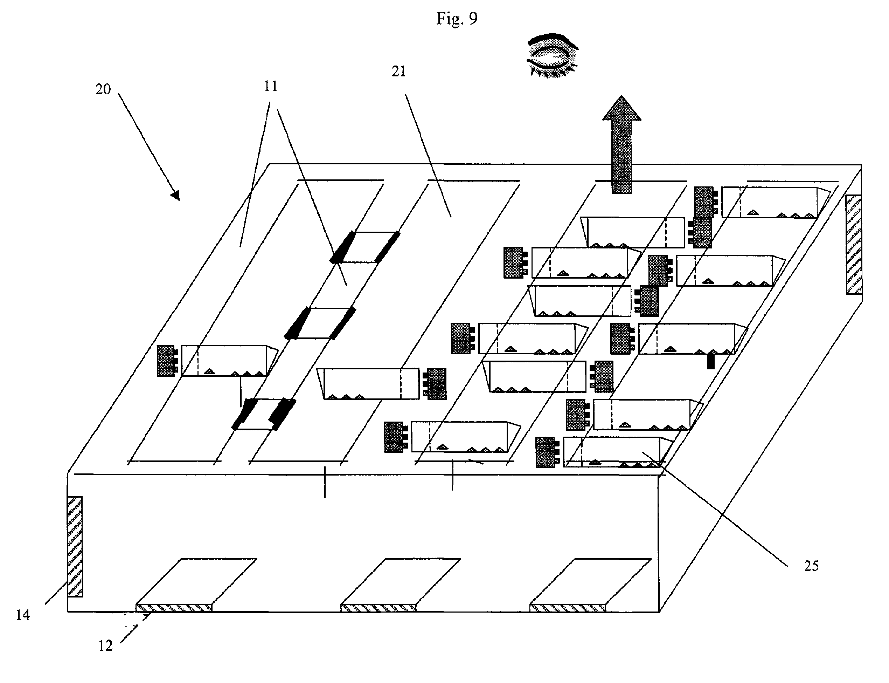

Fig. 9 is a backlight 20 with slots 21 in the floor 1 of reflector box that form opening to allow light from mini lightbars to fill the reflector box (not shown) directly above the region 20 containing the mini lightbars and their associated light source. Also shown are fan14 and ventilation means 12 to help remove heat from the LED light source. The LED may be arranged in any manner to fill the slot (right or left) or in the slot run horizontally from either side. The slot may be any size or shape and may be in combination with in non-slot like holes. The slots may also be interconnected to minimize large areas that are not directly lit and mini lightbars positioned to directly or indirectly light the region between the slots. Not all mini lightbars need to be the size length or width. They may be custom fit to the desired area that needs to be lit.

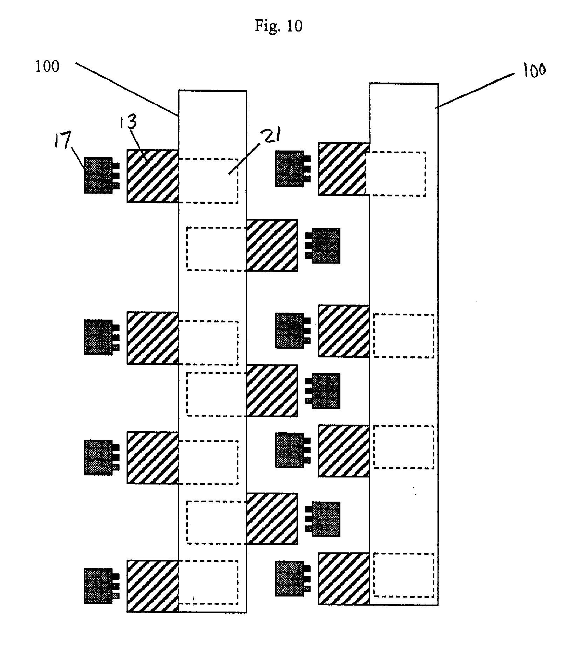

Fig. 10 shows mini lightbars 100 employing LED light source 17, light mixing section 13, and opening 21 to provide light to the lighter. The plan view shows a series of mini lightbars that feed light into an elongated light channel. The light source end and mixing section end of the mini lightbars may be hidden by a member of a lightbox such as the floor of one. The elongated illuminator would be on an elevated plane from the mini lightbar.

Example

The color uniformity of a light pipe configured as light channel 18 according to the present invention was compared to the color uniformity of a light guide plate (LGP) for similar solid-state light sources. The light pipe was formed from PMMA and had a 6mm square cross section and 245 mm length. A light extraction film was adhered to the topside of the light pipe. The light extraction film had prismatic features partly embedded into a layer of optical clear adhesive that forms regions of polymer next to regions of air. The adhesive (approximately 10 microns thick) was coated onto a sheet of polyester film. The polyester film was then adhered to the topside of the light pipe using an optically clear adhesive.

An array of LEDs was position on each end of the light pipe. The output light was measured as it exited the light extraction film. A point approximately midway between the LEDs and near the widthwise center of the light pipe (approximately 3mm from an edge of the light pipe) was measured as Sample 1. A second point near the edge was selected as Sample 2 and compared in color uniformity to the center point.

For comparison, a light guide plate of the same material, thickness and length was selected. The width of the LGP was several times wider than the light pipe. The same type of light extraction film was applied to the LGP in a similar manner as described for the light pipe. The LGP used the same LED light sources on each end. A point midway between the LEDs was selected as Sample 11. A comparative point within a couple of mm of Sample 11 was also measured and compared as Sample 12.

The color shift of light pipe and light guide plate is evaluated using standard CIE 1931 color spaces. For this standard, the tristimulus values of the light are given by the integration across the whole visual spectrum as the following:

$$X = k \int P(\lambda) I(\lambda) \bar{x}(\lambda) d\lambda$$

$$Y = k \int P(\lambda) I(\lambda) \bar{y}(\lambda) d\lambda$$

$$Z = k \int P(\lambda) I(\lambda) \bar{z}(\lambda) d\lambda \; ,$$

$$k = \frac{100}{\sum I(\lambda)\overline{y}(\lambda)\Delta\lambda}$$

where the $\overline{x}$, $\overline{y}$, and $\overline{z}$ are matching functions of Red, Green, and Blue color spectra, respectively. $k$ is a constant and $\lambda$ is the wavelength. $P(\lambda)$ is the light spectrum and $I(\lambda)$ is the standard illuminant. Normalizing tristimulus values gives the chromaticity coordinates, which are as follows:

$$x = \frac{X}{X+Y+Z}$$

$$y = \frac{Y}{X+Y+Z}$$

$$z = \frac{Z}{X+Y+Z}$$

$$x + y + z = 1$$

Table 1 lists relevant parameter measurements and results. To compare the color uniformity of the light pipe of light channel 18 vs. the light guide plate (LGP) in tristimulus space, the square root of the sum of the squares of $\Delta x$ and $\Delta x$ value for the light pipe (Sample 2 vs Sample 1) is compared to the same value for the LGP (Sample 12 vs. Sample 11). The results are shown in the $\Delta$ Color row of Table 1 The lower $\Delta$ Color value for the light pipe indicate a more uniform color. Here, the light pipe showed to be approximately 20 times more uniform than the LGP. The use of the light pipe thus provides improved color mixing over than of the LGP.

**Table 1**

|  | Lightpipe | | Lightguide plate | |
|---|---|---|---|---|
|  | Sample 1 (Center) | Sample 2 (Comparison) | Sample 11 (Center) | Sample 12 (Comparison) |
| **x** | 0.27693 | 0.27726 | 0.26790 | 0.27131 |
| **y** | 0.28573 | 0.28818 | 0.28158 | 0.29186 |
| **Δx** |  | -0.00562 |  | 0.17284 |
| **Δy** |  | 0.00613 |  | -0.01027 |
| **ΔColor** |  | 0.00831 |  | 0.01731 |
| Notes to Table 1:<br>$\Delta x = X_{Sample\ 2}, - X_{Sample\ 1}, \Delta y = y_{Sample2}, - y_{Sample1}$<br>$\Delta$ Color = Square Root($\Delta x^{\wedge}2 + \Delta y^{\wedge}2$) | | | | |

The apparatus of the present invention provides a high degree of light extraction, directing at least 50% of the LED light outwards toward a display panel. Advantaged over earlier backlighting approaches, the apparatus of the present invention provides improved color mixing. Using Red, Green, and Blue LEDs, high spatial uniformity of color can be achieved over the visible range. For specialized applications, wavelengths longer or shorter than the visible range could be used. Brightness uniformity of better than 80% can be provided. Advantageously, backlight apparatus of the present invention can provide sufficient brightness so that it eliminates the need for a light guide plate and minimizes the need for supporting films for light enhancement and polarization. Backlight apparatus formed from multiple elongated illuminators is easily scalable, making this solution particularly suitable for display panels of larger dimensions. A larger display panel can be supported simply by using additional elongated illuminators. At the same time, due to its low dimensional profile, this solution can help to reduce overall thickness of the display device.

The invention has been described in detail with particular reference to certain preferred embodiments thereof, but it will be understood that variations and modifications can be effected within the scope of the invention as described above, and as noted in the appended claims, by a person of ordinary skill in the art without departing from the scope of the invention. For example, the method of the present invention could be used with any of a number of types or colors of light sources. Any of a number of light conditioning elements could be provided as part of backlight apparatus 10, including components used for light shaping, light collimating, light spreading, light polarization, and light recycling, for example.

The invention has been described in detail with particular reference to certain preferred embodiments thereof, but it will be understood that variations and modifications can be effected within the spirit and scope of the invention. The patents and other publications referred to in this description are incorporated herein by reference in their entirety.

## PARTS LIST

10 is a backlight
11 is the base of the light box with openings
12 is opening for cooling and venting
13 is a light mixing section of a light bar
14 is a cooling fan
15 is a light redirecting features
16 is a reflective surface
17 is an LED
18 is a light channel
19 is a reflector box
20 is an open region below the reflector box or bottom half of the lighbox
21 is an opening
25 is a mini- lightbar and light source
27 is an open region

31 is a light redirecting feature (hole/indent)
32 is a diverging region of the light pipe to help spread light over a wider foot print
33 is a light extraction film
34 is a region of air between polymer features

51 is a convex lens-shape
52 is a concave shape

60 is a reflective surface
61 is a modified mini lightbar
62 is an "L-shaped" extension of the mini lightbar
63 is a sloped reflector
64 is a modified mini lightbar
65 is a modified mini lightbar

71 is a means of light control
72 is a light ray

81 is a light distribution fin
82 is a light distribution bundle of optical fibers.
83 is a diverging cone for light distribution.

**Claims**

1. A backlight for a display comprising a reflector box comprising reflective areas and aperture areas and mini lightbars located in a region below the reflector box and arranged to provide light through the apertures.

2. The backlight of Claim 1 wherein aperture areas are in the floor or base of the reflector box.

3. The backlight of Claim 1 wherein said aperture areas provide lighting across the reflector box (both aperture and areas between aperture) with less than 15% luminance difference from point to point.

4. The backlight of Claim 3 wherein said reflector box further comprises a means of diffusion to aid in light uniformity.

5. The backlight of Claim 1 wherein said aperture areas comprise holes and slots.

6. The backlight of Claim 1 wherein said region below said reflector box comprises at least one selected from the group consisting of light source, power supply, wiring, fan, ventilation means, reflector, light input, light mixing, light channel, light redirection, light extraction.

7. The backlight of Claim 1 wherein said mini lightbars further comprise a light source.

8. The backlight of Claim 1 wherein said light source is a solid-state light source.

9. The backlight of claim 1 wherein said mini lightbar is positioned in a manner wherein the light source and the light mixing section are substantially out of sight when viewed from the reflector box side.

10. The backlight of Claim 1 wherein said region below said reflector box comprises at least one mini lightbars.

Fig. 1

Fig. 2

EP 1 995 613 A1

Fig. 3

Fig. 4

EP 1 995 613 A1

Fig. 5

EP 1 995 613 A1

Fig. 6

EP 1 995 613 A1

Fig. 7

Fig. 8

EP 1 995 613 A1

Fig. 9

EP 1 995 613 A1

Fig. 10

EP 1 995 613 A1

**EP 1 995 613 A1**

European Patent
Office

**EUROPEAN SEARCH REPORT**

Application Number

EP 08 15 6652

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2006/010249 A (UNIV BRITISH COLUMBIA [CA]; WHITEHEAD LORNE A [CA]) 2 February 2006 (2006-02-02) * paragraphs [0016] - [0018] * * paragraph [0022] * * figures 1,2 * ----- | 1-10 | INV. G02B6/00 F21V8/00 G02F1/13357 |
| Y | US 2007/058393 A1 (KIM SU-GUN [KR] ET AL) 15 March 2007 (2007-03-15) * paragraphs [0055] - [0059] * * figures 1,2 * ----- | 1-10 | |
| A | US 2005/168967 A1 (KAO KO-CHIA [TW] ET AL) 4 August 2005 (2005-08-04) * paragraphs [0015] - [0020] * * figures 3-5 * ----- | 1-10 | |
| A | US 2006/022935 A1 (SAKAI SEIJI [JP] ET AL) 2 February 2006 (2006-02-02) * paragraphs [0197] - [0206] * * figures 35,36 * ----- | 1-10 | |
| | | | TECHNICAL FIELDS SEARCHED (IPC) G02B G02F H01L |

The present search report has been drawn up for all claims

| Place of search | Date of completion of the search | Examiner |
|---|---|---|
| The Hague | 11 September 2008 | Kloppenburg, Martin |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

## ANNEX TO THE EUROPEAN SEARCH REPORT
## ON EUROPEAN PATENT APPLICATION NO.

EP 08 15 6652

This annex lists the patent family members relating to the patent documents cited in the above-mentioned European search report.
The members are as contained in the European Patent Office EDP file on
The European Patent Office is in no way liable for these particulars which are merely given for the purpose of information.

11-09-2008

| Patent document cited in search report | | Publication date | Patent family member(s) | | Publication date |
|---|---|---|---|---|---|
| WO 2006010249 | A | 02-02-2006 | CA | 2573689 A1 | 02-02-2006 |
| | | | CN | 101057162 A | 17-10-2007 |
| | | | EP | 1779153 A1 | 02-05-2007 |
| | | | JP | 2008507737 T | 13-03-2008 |
| | | | KR | 20070049147 A | 10-05-2007 |
| | | | US | 2007268461 A1 | 22-11-2007 |
| US 2007058393 | A1 | 15-03-2007 | CN | 1928667 A | 14-03-2007 |
| | | | KR | 20070029365 A | 14-03-2007 |
| US 2005168967 | A1 | 04-08-2005 | CN | 1558283 A | 29-12-2004 |
| | | | TW | 240109 B | 21-09-2005 |
| US 2006022935 | A1 | 02-02-2006 | JP | 2006040764 A | 09-02-2006 |

EPO FORM P0459

For more details about this annex : see Official Journal of the European Patent Office, No. 12/82

**EP 1 995 613 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 6789921 B
- US 5499112 A
- US 5400224 A
- US 20030123246 A
- US 5835661 A
- US 20050231973 A
- US 5857761 A
- US 6464588 B

- US 6714185 B
- US 5542016 A
- US 5506929 A, Tai
- US 20050270798 A
- US 6104371 A
- US 6425675 B
- US 20040223691 A
- US 20040179776 A

### Non-patent literature cited in the description

- **M. ZEILER ; J. HUTTNER ; L. PLOTZ ; H. OTT.** Late-News Paper: Optimization Parameters for LED Backlighting Solutions. *SID 2006 Digest,* 2006, 1524-1527